# EUROPEAN PATENT APPLICATION

(11) **EP 1 367 801 A2**
(43) Date of publication of application: **03.12.2003**
(21) Application number: 03001649.7
(22) Date of filing: 24.01.2003
(51) Int. Cl.: H04M 1/02, G06F 1/16

(54) **Information processing apparatus with multiple displays and corresponding display method**

(30) Priority: 31.05.2002 JP 2002159517
(71) Applicant: Kabushiki Kaisha Toshiba, Tokyo (JP)
(72) Inventor: Nakai, Eiichi, Tokyo 105-8001 (JP)
(74) Representative: Henkel, Feiler, Hänzel

(57) **Abstract**

An information processing apparatus displays contents data including a first image data, a second image data, and a third image data when viewing an object from a front direction, a side direction, and a top direction, respectively. The information processing apparatus includes an apparatus main body (1), a multi-view display device (120) including at least a first display unit (131), a second display unit (132), and a third display unit (133) provided individually at a front face, a side face, and a top face, respectively, of the apparatus main body (1), and control unit for displaying the first image data, the second image data, and the third image data on the first display unit (131), the second display unit (132), and the third display unit (133), respectively, of the multi-view display device (120).

## Description

The present invention relates to an information processing apparatus such as a mobile phone and a PDA (Personal Digital Assistant), and to an object display method employed in the same apparatus.

In recent years, with the development of information processing technology and wireless communication technology, various apparatuses have been proposed. For example, portable information processing apparatuses such as mobile (cellular) phones and PDAs (Personal Digital Assistants) have come into wide use. These kinds of portable information processing apparatus can display various contents such as text, images, and the like. However, portable information processing apparatuses require miniaturization; for this reason, the display screen size (display resolution) mountable thereto is relatively small. As a result, the information content displayable at any one time is inevitably limited.

Japanese Patent Application KOKAI Publication No. 2000-278373 discloses a portable electronic apparatus including a plurality of display units for falsely making large the display screen size. The portable electronic apparatus includes an open/close panel, which is attached to the apparatus main body so that it can be freely opened and closed. The open/close panel includes a display unit at each of its front and back sides. In a state that the open/close panel is opened, the display unit provided at the back side of the open/close panel is arranged parallel with a display unit provided on the apparatus main body. Mutually different information is simultaneously displayed on the display units, and thereby, it is possible to falsely make large the display screen size.

Recently, electronic commerce services using the Internet, such as online shopping and virtual malls, have come into wide use. Image data relevant to objects such as goods are downloaded from a server to the portable information processing apparatus, and thereby, users can confirm the appearance of the object on the display screen of the information processing apparatus.

However, the object displayed on the display screen of the portable information processing apparatus is usually a two-dimensional image. For this reason, the user has difficulty accurately grasping the actual solid shape of the object from the image displayed on the display screen.

In this case, there is known a 3-D technique of displaying a three-dimensional image on the display screen. According to the above 3-D technique, a pseudo-solid display is realized by taking advantage of illusions created in the human visual sensory system. The pseudo-solid display causes distortion in the shape of the displayed object. For this reason, even if the above 3-D technique is used, it is difficult for the user to accurately grasp the ratio of width, depth, and height of the actual object from the 3-D image displayed on the display screen.

Therefore, it is required to realize a novel structure for displaying the shape of the object without distortion so that the user can accurately grasp the ratio of width, depth, and height of the actual object from the image displayed on the display screen.

It is an object of the present invention to provide an information processing apparatus, which can display the shape of an object without causing distortion, and to an object display method.

According to an embodiment of the present invention, there is provided an information processing apparatus capable of displaying contents data, said contents data including a first image data, a second image data, and a third image data when viewing an object from a front direction, a side direction, and a top direction, respectively, comprising: an apparatus main body; a multi-view display device including at least a first display unit, a second display unit, and a third display unit provided individually at a front face, a side face, and a top face, respectively, of the apparatus main body; and control means for displaying the first image data, the second image data, and the third image data on the first display unit, the second display unit, and the third display unit, respectively, of the multi-view display device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing the external appearance of an information processing apparatus main body according to one embodiment of the present invention when viewing from the front side;
FIG. 2 is a perspective view showing the external appearance of the information processing apparatus main body shown in FIG. 1 when viewing from the rear side;
FIG. 3 is a perspective view showing the external appearance of the information processing apparatus main body shown in FIG. 1 when viewing from the bottom side;
FIG. 4 is a view showing a state that document data is displayed on a rear side display unit provided in the information processing apparatus main body shown in FIG. 1;
FIG. 5 is a block diagram showing the system configuration of the information processing apparatus shown in FIG. 1;
FIG. 6 is a view showing a data format of contents received by the information processing apparatus shown in FIG. 1 via a network;
FIG. 7 is a block diagram showing the configuration of a polyhedron display control unit provided in the information processing apparatus shown in FIG. 1;
FIG. 8 is a flowchart showing the procedure of contents data processing executed by the information processing apparatus shown in FIG. 1;
FIG. 9 is a flowchart showing the procedure of display image reduction processing executed by the information processing apparatus shown in FIG. 1;
FIG. 10 is a view showing a data format of contents with document data received by the information processing apparatus shown in FIG. 1 from a network; and
FIG. 11 is a flowchart showing the procedure of display processing of the contents with document data executed by the information processing apparatus shown in FIG. 1.

An embodiment of the present invention will be described below with reference to the accompanying drawings.

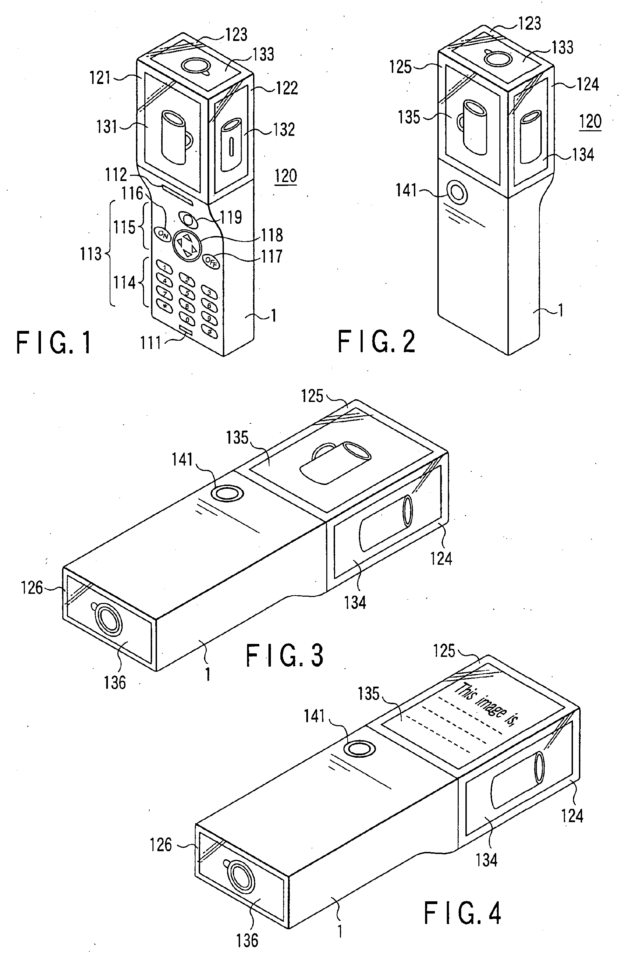

FIG. 1 and FIG. 2 are perspective views showing the external appearance of an information processing apparatus according to one embodiment of the present invention when viewing from the front and rear sides, respectively. The above information processing apparatus is a portable information processing apparatus, such as a mobile phone and PDA. In the following, the structure and configuration of the information processing apparatus will be described on the assumption that the apparatus is realized as a mobile phone.

A mobile phone 1 is used as a mobile station, which performs the transmission and reception of voice/data with the base station by radio. The mobile phone 1 has a contents display function in addition to a voice/data communication function. The contents display function is a function of downloading various contents data from a server providing content delivery service, and displaying the contents data.

As illustrated in FIG. 1, a voice input microphone 111, a voice output speaker 112, and a key input unit 113 are arranged on the front side of the main body of the mobile phone 1.

The key input unit 113 comprises a dial key input unit 114 including a plurality of buttons, and a function key group 115. The function key group 115 comprises a power on (off hook) button 116, a power off (on hook) button 117, a cursor button 118 and an enter button 119.

Further, the mobile phone 1 includes a front side display unit 131, a right side display unit 132, and a top side display unit 133. These display units 131, 132, and 133 are respectively arranged on the front, right, and top sides of the main body.

As shown in FIG. 2, the mobile phone 1 further includes a left side display unit 134 and a rear side display unit 135. These display units 134 and 135 are respectively arranged on the left and rear sides of the main body. In addition, a camera unit 141 is arranged on the rear side of the main body.

The above five display units 131 to 135 constitute a rectangular-shaped multi-view display device 120. The multi-view display device 120 is a polyhedron display device having a plurality of display screens. The multi-view display device 120 is provided with transparent plates 121 to 125 comprising a transparent glass or acrylic plate at the front, right, top, left and rear sides. The transparent plates 121 to 125 are positioned on each display screen of the front side, right side, top side, left side, and rear side display units 131 to 135. The transparent plates 121 to 125 individually have a rectangular shape, and also, the display units 131 to 135 individually have a rectangular shape.

That is, the multi-view display device 120 has a transparently rectangular-shaped housing, and has the structure in which five sides, that is, the front, right, top, left, and rear sides are individually provided with each display screen of the display units 131 to 135.

As illustrated in FIG. 3, the mobile phone 1 further includes a bottom display unit 136, which is arranged on the bottom side of the main body. A transparent plate 126 is provided on the display screen of the bottom display unit 136 so as to cover the entire bottom of the mobile phone main body 1. The bottom display unit 136 functions as one unit constituting the multi-view display device 120, as well as the above front, right, top, left, and rear side display units 131 to 135.

Each of the display units 131 to 136 comprises a flat panel display such as an LCD (Liquid Crystal Display), for example. Of the above display units 131 to 136, the front side display unit 131 functions as the main display of the mobile phone 1.

The following is a description of an example of displaying a shape of an object from multiple viewpoints by utilizing the display units 131 to 136.

In an embodiment of the present invention, the object multi-view display is to display contents data on each of the display units 131 to 136 in a state where the display angle view has changed. In the object multi-view display, image data when viewing a certain object from its front, right, top, left, rear, and bottom sides are simultaneously displayed on individual display units 131 to 136.

More specifically, the front side display unit 131 is used to display the image data when viewing the object from the front side. Likewise, the right side display unit 132 is used to display the image data when viewing the object from the right side, and the top side display unit 133 is used to display the image data when viewing the object from the top side. Likewise, the left side display unit 134 is used to display the image data when viewing the object from the left side, and the rear side display unit 135 is used to display the image data when viewing the object from the rear side. Finally, the bottom side display unit 136 is used to display the image data when viewing the object from the bottom side.

Incidentally, it is not necessary to always display all six sides of the object. In this case, it is enough that at least two image data is displayed. That is, images viewed from a first side and a second side of the object may be displayed on a first and a second of the display units. As described above, the object may be displayed on several display units from various different angles. By doing so, it is possible to display the shape of the object when viewing the actual object from the front, side, and top of the object without distortion. Therefore, users can accurately grasp the ratio of width, depth, and height of the actual object on the display screen.

The above object multi-view display is used to display the image of the object included in the contents data downloaded from a contents server providing contents delivery service. The contents data sent from the server includes at least two image data as display data of the object. The image data are each display data when viewing the object, such as goods, from mutually different two sides, that is, the front side, the right or left side, or the top side of the object.

For example, assume that the contents data sent from the server includes two image data photographing goods, e.g., a cup from its front and right sides. In this case, the above two image data photographing the cup from its front and right sides are simultaneously displayed on each of the front and right side display units 131 and 132, as illustrated in FIG. 1.

If the contents data sent from the server includes six image data photographing the cup from its six sides, the following display is made in addition to the display shown in FIG. 1. That is, as seen from FIG. 2 and FIG. 3, another four image data photographing the cup from its top, left, rear, and bottom sides are further simultaneously displayed on each of the top, left, rear, and bottom side display units 133, 134, 135 and 136.

The determination of which display unit should be used for the object multi-view display depends on the contents data to be displayed. Namely, if the contents data including six image data photographing the object from all of its six sides is prepared, all display units 131 to 136 are used for the display. On the other hand, if contents data including two image data photographing the object from its front and right sides is prepared, the front side display unit 131 and the right side display unit 132 are used. The top side display unit 133, the left side display unit 134, the rear side display unit 135, and the bottom side display units 136 are not used. The unused display units may be used to display document data relative to the object.

For example, if the contents data includes two image data photographing an object from its front and side, and document data relative to the object, the document data may be displayed on the rear side display unit 135, as shown in FIG. 4. By doing so, it is possible to simultaneously display the document data while displaying the object image from multiple viewpoints. Therefore, users can simultaneously read (watch) character information, such as an explanation text, for the object in addition to the object image.

In application to business, the above display mode is applicable to briefing presentations using the mobile phone 1. For example, a business salesperson reads the document data displayed on the rear side display unit 135 as a brief memo for presentation while showing the front side display unit 131, that is, the object image displayed from multiple viewpoints, towards customers.

In this case, the content provider prepares contents data (hereinafter, referred to as "multi-view display contents data") including at least two image data photographing the object from its front and side directions. Therefore, in the mobile phone 1, there is no need of taking procedures for creating the multi-view display contents data. Of course, the user takes a photograph of a certain object from its front and side directions by using a camera unit 141, and thereby, it is possible to generate the above multi-view display contents data in the mobile phone 1 using two image data obtained by photographing.

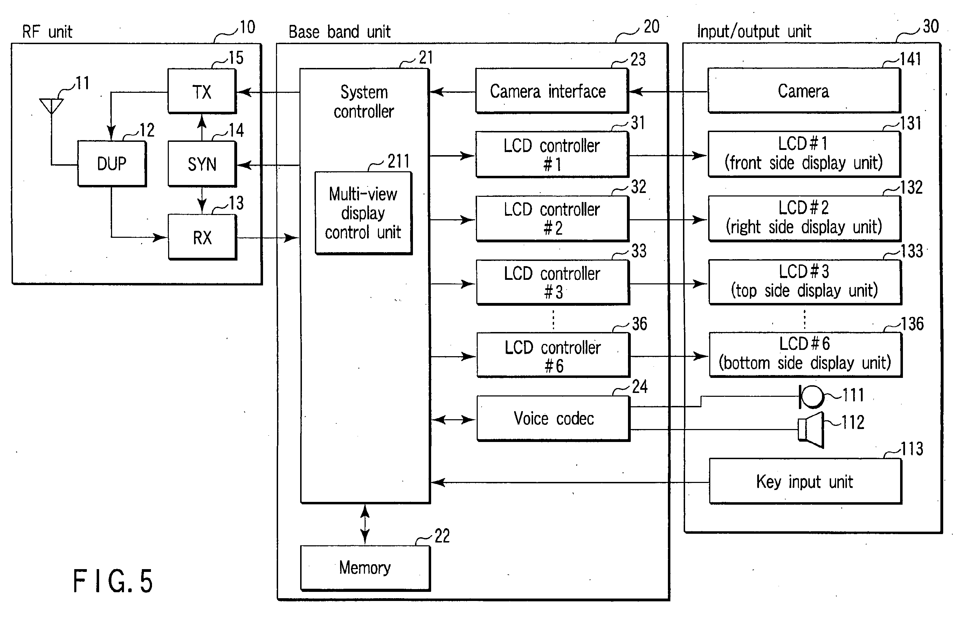

The system configuration of the mobile phone 1 will be described below with reference to FIG. 5. Here, assume that the above display units 131 to 136 each comprise an LCD.

The mobile phone 1 includes an RF (Radio Frequency) unit 10, a base band unit 20, and an input/output unit 30, as depicted in FIG. 5. The RF unit 10 comprises an antenna 11, a duplexer (DUP) 12, a receiver (RX) 13, a transmitter (TX) 15, and a frequency synthesizer (SYN) 14. The RF unit 10 makes the voice/data transmission and reception with the base station by radio signal according to the control of the base band unit 20.

The base band unit 20 performs a process of generating the voice/data to be transmitted via the RF unit 10, and a process of reproducing the voice/data received by the RF unit 10. The base band unit 20 comprises a system controller 21, a memory 22, a camera interface 23, a voice codec 24, and six LCD controllers 31 to 36.

The system controller 21 controls other components of the base band unit 20, the RF unit 10 and the input/output unit 30, by executing programs stored in the memory 22.

The voice codec 24 carries out the following process. That is, the voice codec 24 modulates a voice signal input from the microphone 11, and transmits it to the RF unit 10. Further, the voice codec 24 demodulates the voice signal received by the RF unit 10, and outputs it via a speaker 112.

Six LCD controllers 31 to 36 are display controllers provided correspondingly to the above six display units 131 to 136. Each of six LCD controllers 31 to 36 drives the corresponding display unit (LCD), and controls the LCD.

The system controller 21 has a built-in multi-view display control unit 211. The multi-view display control unit 211 carries out the object multi-view display described before. Namely, if data received by the RF unit 10 is multi-view display contents data, the multi-view display control unit 211 supplies each image data included in the multi-view display contents data to display controllers corresponding to the necessary display units.

For example, the image data viewing the object from its front side is sent to the LCD controller 31 by the multi-view display unit 211, and thereafter, displayed on the LCD display screen constituting the front side display unit 131. The image data viewing the object from its right side is sent to the LCD controller 32 by the multi-view display unit 211, and thereafter, displayed on the LCD display screen constituting the right side display unit 132. Further, the image data viewing the object from its top side is sent to the LCD controller 33 by the multi-view display unit 211, and thereafter, displayed on the LCD display screen constituting the top side display unit 133.

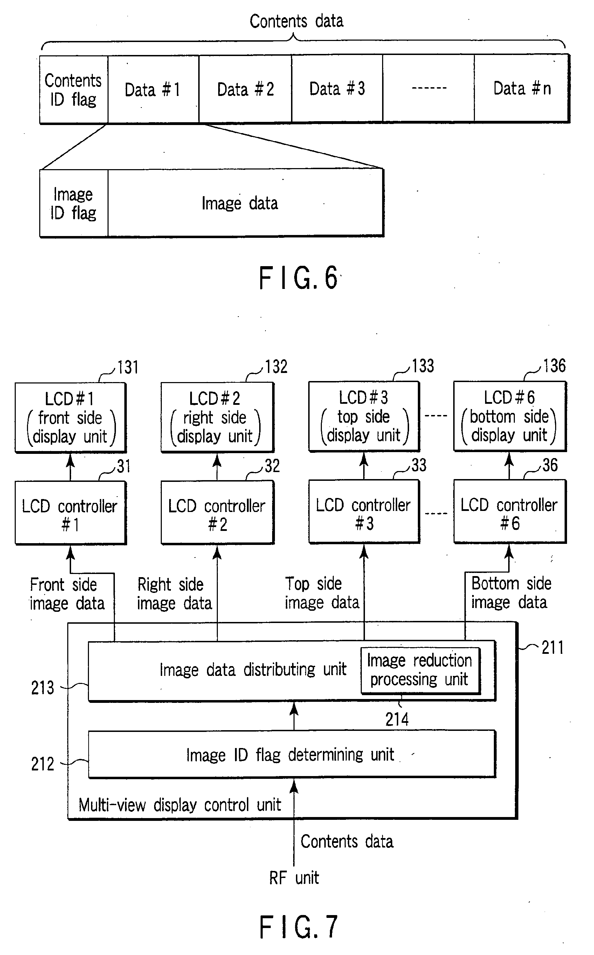

FIG. 6 shows a data format of contents data transmitted to the mobile phone 1 by a content server.

The contents data is composed of a contents ID flag and one or more data fields following the ID flag. The contents ID flag is contents identification information representing the kind of the contents data.

If the contents data is multi-view display contents data, the contents ID flag includes identification information indicative that the above contents data is multi-view display contents data. In the multi-view display contents data, at least three data fields are added after the contents ID flag.

Each data field of the multi-view display contents data is composed of an image ID flag and image data following the ID flag. The image ID flag is identification information indicative that the data field is image data when viewing the object from which of the front, right, top, left, rear, and bottom sides. All of image data included in the multi-view display contents data may have the same display size.

If the multi-view display contents data is script data described by a markup language such as HTML (Hyper Text Markup Language), it is possible to realize each data field by an image file linked by the script data. For example, if the multi-view display contents data including two image data is configured by an HTML file, two image files are linked with the HTML file. Each image file has added identification information indicative that the image file is image data when viewing the object from which side.

FIG. 7 shows the configuration of the multi-view display control unit 211. The multi-view display control unit 211 includes an image ID flag determining unit 212, and an image data distributing unit 213, as seen from FIG. 7.

If contents data received by the RF unit 10 is multi-view display contents data, the multi-view display contents data is sent to the image ID flag determining unit 212. The image ID flag determining unit 212 checks the image ID flag for each data field included in the multi-view display contents data. Thereafter, the image ID flag determining unit 212 determines whether the image ID flag is image data to be displayed on which display unit for each data field.

According to the determination result, the image data distributing unit 213 distributes many image data included in the multi-view display contents data to the LCD controller corresponding to each display unit on which the image data should be displayed.

For instance, assume that the multi-view display contents data includes the following two image data. The image data are a first image data (front image data) viewing the object from its front side and a second image data (right-side image data) viewing the object from its right side.

In this case, the image data distributing unit 213 distributes the first to second image data to the LCD controllers 31 to 32 as display data. By doing so, the first to second image data are displayed on the display screens of the display units 131 to 132, respectively.

The image data distributing unit 213 includes an image reduction (compression) processing unit 214. The image reduction processing unit 214 carries out image reduction processing of reducing the display size of each multi-view display image data, as the need arises.

According to the above image reduction processing, the display size of any image data included in the multi-view display contents data is reduced in the following manner. That is, the display size is reduced so as to match with the display resolution of the display unit having the smallest display screen size (display resolution) in the several display units displaying image data included in the multi-view display contents data. By doing so, it is possible to display the object viewing from multiple viewpoints in the same size, regardless of the difference in display resolution between the display units 131 to 136.

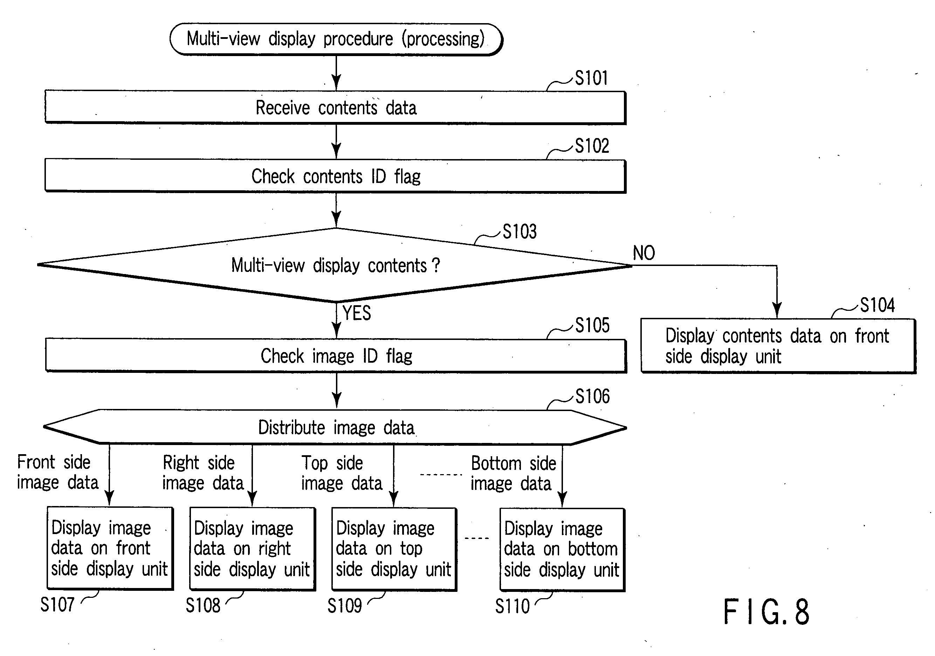

The processing flow until the mobile phone 1 displays contents data on the multi-view display device 120 after receiving the contents data will be described below with reference to the flowchart of FIG. 8.

The RF unit 10 makes radio communications with the base station, and receives contents data from a server sent via the base station (step S101). The contents data received by the RF unit 10 is sent to the system controller 21. The system controller 21 stores the received contents data in the memory 22, and thereafter, analyzes the contents data.

In the above analysis, the system controller 21 checks the content ID flag attached to the received contents data (step S102), and determines whether or not the contents data is multi-view display contents data (step S103).

If the received contents data is usual contents data other than the multi-view display contents data (NO in step S103), the system controller 21 selects the main display of the mobile phone 1, that is, the front side display unit 131 as the display unit for displaying the contents data. In this case, the system controller 21 outputs image or character information included in the contents data to the LCD controller 31 so that the image or character information can be displayed on the front side display unit 131 (step S104).

On the other hand, if the received contents data is multi-view display contents data (YES in step S103), the system controller 21 checks the image ID flag of each image data included in the multi-view display contents data, using the multi-view display control unit 211. By doing so, the system controller 21 determines the display unit to be selected as display destination for each image data (step S105).

Thereafter, the system controller 21 distributes each image data included in the multi-view display contents data to the LCD controller corresponding to the destination display unit, using the multi-view display control unit 211 (step S106). The front side image data is sent to the LCD controller 31 corresponding to the front side display unit 131, and displayed on the display screen of the front side display unit 131 (step S107). Likewise, the right side image data is sent to the LCD controller 32, and displayed on the display screen of the right side display unit 132 (step S108). The top side image data is sent to the LCD controller 33, and displayed on the display screen of the top side display unit 133 (step S109). Further, the bottom side image data is sent to the LCD controller 36, and displayed on the display screen of the bottom side display unit 136 (step S110).

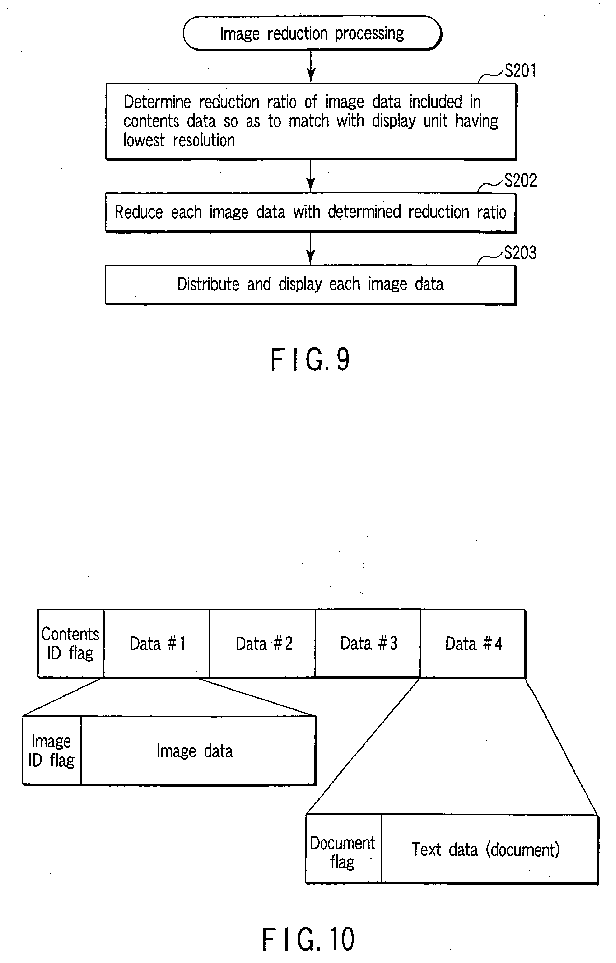

The procedure for the image reduction processing carried out by the image reduction processing unit 214 in the image data distribution processing shown in step S106 of FIG. 8 will be described below with reference to the flowchart of FIG. 9.

The image reduction processing is carried out in the following case. That is, the display size of image data included in the multi-view display contents data is larger than the display resolution of the display unit having the lowest display resolution in the display units determined as the destination display units.

First, a reduction ratio used for the image reduction processing is determined in the following manner (step S201). That is, the reduction ratio is determined based on the display resolution of the display unit having the lowest display resolution in the display units determined as the destination display units and the display size of image data included in the multi-view display contents data.

For example, assume that three display units, that is, the front, right, and top side display units 131 to 133 are determined as destination display units displaying the multi-view display contents data. If the display resolution of the right side display unit 132 is equal to that of the top side display unit 133, and the display resolution of the right and top side display units 132 and 133 is designed smaller than that of the front side display unit 131, the reduction ratio is determined in the following manner. That is, the reduction ratio is determined based on the display resolution of the right or top side display unit 132 or 133 and the display size (resolution) of image data included in the multi-view display contents data, so that the resolution of image data is matched with the resolution of the display unit 132 or 133.

Each image data included in the multi-view display contents data is reduced with the same reduction ratio as determined in step S201 (step S202). Reduced image data are distributed to LCD controllers 31 to 33, and are displayed on display units 131 to 133 (step S203).

In this manner, each image data included in the multi-view display contents data is reduced with the same reduction ratio, and thereby, it is possible to display the multi-view display contents data so that the user can accurately grasp the shape of the actual object. That is, even if the display resolution differs in the display units 131 to 136, it is possible to display each object when viewing it from multiple viewpoints having the same size.

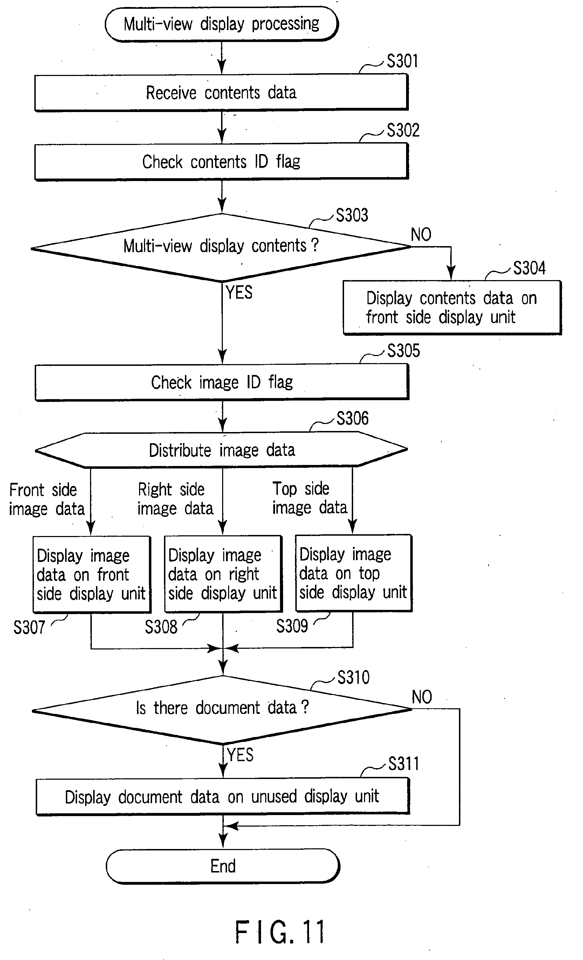

The procedure for displaying the multi-view display contents data including document data will be described below with reference to FIG. 10 and FIG. 11.

FIG. 10 shows a data format of the multi-view display contents data including document data. The document data is composed of text data describing/explaining the object. The document data is included as one data field in the multi-view display contents data, like each image data of the object. The data field of the document data is attached with a document flag indicative that the data field includes document data. The document flag enables the apparatus to determine whether or not the multi-view display contents data includes document data.

For instance, if the received contents data is multi-view display contents data composed of front, right, and top side image data of a certain object, and document information describing the explanation relevant to the object, it includes four data fields as shown in FIG. 10.

The processing flow executed by the mobile phone 1 will be described below with reference to the flowchart of FIG. 11. The processing flow is the procedure until the mobile phone 1 displays the multi-view display contents data including the document data on the multi-view display device 12.

The RF unit 10 makes radio communications with the base station, and receives contents data from a server sent via the base station (step S301). The contents data received by the RF unit 10 is sent to the system controller 21. The system controller 21 stores the received contents data in the memory 22, and thereafter, analyzes the contents data.

In the above analysis, the system controller 21 checks the content ID flag attached to the received contents data (step S302), and determines whether or not the contents data is multi-view display contents data (step S303).

If the received contents data is usual contents data other than the multi-view display contents data (NO in step S303), the system controller 21 selects the main display of the mobile phone 1, that is, the front side display unit 131 as the display unit for displaying the contents data.. In this case, the system controller 21 outputs image or character information included in the contents data to the LCD controller 31 so that the image or character information may be displayed on the front side display unit 131 (step S304).

On the other hand, if the received contents data is multi-view display contents data (YES in step S303), the system controller 21 checks the image ID flag of each image data included in the multi-view display contents data, using the multi-view display control unit 211. Thus, the system controller 21 determines the display unit to be selected as the destination display unit for each image data (step S305).

Thereafter, the system controller 21 distributes each image data included in the multi-view display contents data to the LCD controller corresponding to the destination display unit, using the multi-view display control unit 211 (step S306). For example, if the received contents data is multi-view display contents data composed of front, right, and top side image data of a certain object, and document data relevant to the object, it is displayed in the following manner. That is, the front, right, and top side image data are distributed to the LCD controllers 31 to 33 so that these image data can be displayed on the front, right, and top side display units 131 to 133, respectively (step S307 to step S309).

Thereafter, the system controller 21 checks whether or not there exists a data field including a document flag, and thereby, determines whether or not there is document data to be displayed (step S310). If the document data to be displayed exists, the system controller 21 selects an arbitrary one of the display units, which are not currently used for image data display, in the display units 131 to 136. Then, the system controller 21 outputs the document data to the LCD controller corresponding to the above selected display unit as display data so that the document data can be displayed on the selected display unit (step S311).

For example, if the received contents data is multi-view display contents data including front, right, and top side image data, the unused display units are three, that is, left, rear, and bottom side display units 134 to 136. In this case, one of three display units 134 to 136 is selected as the display unit for displaying document data. Incidentally, if the rear side display unit 135 is unused, it is preferable to preferentially select the rear side display unit 135.

As is evident from the above description, according the present embodiment, multi-view display is realized in the following manner. That is, the first to second data viewing the object from at least two directions, e.g., two of its front, right, left, or top sides are displayed on two display units provided on two sides of the apparatus main body. By doing so, it is possible to simultaneously display the same object on several display units from different display angles. Therefore, it is possible to simultaneously display the shapes of the actual object, that is, the shapes viewing from two directions without distortion. As a result, users can accurately grasp the ratio of width, depth, and height of the actual object from the multi-view display image thus displayed.

In the above embodiment, the multi-view display contents data sent from the external server via a wireless network is displayed. The network used for communication with the external server may be any of wired or wireless networks.

The above multi-view display contents data may be read from a computer readable memory medium, which is previously stored with multi-view display contents data, and thereafter, may be displayed. For example, memory cards mountable to portable information processing apparatuses, such as mobile phones and PDAs, may be used.

## Claims

1. An information processing apparatus capable of displaying contents data, said contents data including a first image data, a second image data, and a third image data when viewing an object from a front direction, a side direction, and a top direction, respectively, comprising:
an apparatus main body (1);
a multi-view display device (120) including at least a first display unit (131), a second display unit (132), and a third display unit (133) provided individually at a front face, a side face, and a top face, respectively, of the apparatus main body (1); and
control means (21, 211) for displaying the first image data, the second image data, and the third image data on the first display unit (131), the second display unit (132), and the third display unit (133), respectively, of the multi-view display device (120).

2. The apparatus according to claim 1, further including reception means (10) for receiving contents data externally from the apparatus; and
**characterized in that** the control means (10) includes:
means (212) for determining whether or not the contents data received by the reception means (10) is the contents data including the first image data, the second image data, and the third image data; and
means (213) for outputting the first image data, the second image data, and the third image data to the first display unit, the second display unit, and the third display unit as display data when it is determined that the contents data received includes the first image data, the second image data, and the third image data.

3. The apparatus according to claim 1, further including:
means (214) for reducing each of the first image data, the second image data, and the third image data so as to match with a display resolution of a display unit having a lowest display resolution in the first display unit (131), the second display unit (132), and the third display unit (133).

4. The apparatus according to claim 1, further including a first display controller (31), a second display controller (32), and a third display controller (33) configured to control the first display unit (131), the second display unit (132), and the third display unit (133), respectively, and
**characterized in that** the control means (21, 211) includes means (213) for distributing the first image data, the second image data, and the third image data included in the contents data to the first display controller (31), the second display controller (32), and the third display controller (33), respectively.

5. The apparatus according to claim 1, **characterized in that** the multi-view display device (120) further includes a fourth display unit (135) provided at a rear side of the apparatus main body (1), and
when the contents data further includes a fourth image data viewing the object from a rear side, the control means (21, 211) displays the first image data, the second image data, the third image data, and the fourth image data on the first display unit (131), the second display unit (132), the third display unit (133), and the fourth display unit (135), respectively.

6. The apparatus according to claim 1, **characterized in that** the multi-view display device (120) further includes a fourth display unit (136) provided at a bottom side of the apparatus main body (1), and
when the contents data further includes a fourth image data viewing the object from a bottom side, the control means (21, 211) displays the first image data, the second image data, the third image data, and the fourth image data on the first display unit (131), the second display unit (132), the third display unit (133), and the fourth display unit (136), respectively.

7. The apparatus according to claim 1, **characterized in that** the apparatus main body (1) has right and left sides, and the second display unit (132) is provided at one of the right and left sides.

8. The apparatus according to claim 1, **characterized in that** the apparatus main body (1) has right and left sides, and the second display unit (132) is provided at one of the right and left sides,
the multi-view display device (120) further includes a fourth display unit (134) provided at a remaining one of the right and left sides of the apparatus main body (1), and
when the contents data includes the first image data, the second image data, the third image data, and a fourth image data viewing the object from a front side, right and left sides, and a top side, respectively, the control means (21, 211) displays the first image data, the second image data, the third image data, and the fourth image data on the first display unit (131), the second display unit (132), the third display unit (133), and the fourth display unit (134), respectively.

9. The apparatus according to claim 1, **characterized in that** the multi-view display device (120) further includes a fourth display unit (135) provided at a rear side of the apparatus main body (1), and
when the contents data further includes document data relevant to the object, the control means (21, 211) displays the first image data, the second image data, and the third image data on the first display unit (131), the second display unit (132), and the third display unit (133), respectively, and displays the document data on the fourth display unit (135).

10. The apparatus according to claim 1,
**characterized in that** the apparatus main body (1) has right and left sides, and the second display unit (132) is provided at one of the right and left sides,
the multi-view display device (120) further includes a fourth display unit (134) provided at a remaining one of the right and left sides of the apparatus main body (1), and a fifth display unit (135) provided at a rear side of the apparatus main body (1), and
when the contents data further includes document data relevant to the object, the control means (21, 211) displays the first image data, the second image data, and the third image data on the first display unit (131), the second display unit (132), and the third display unit (133), respectively, and displays the document data on one of the fourth display unit (134) and the fifth display unit (135) unused for displaying the image data of the object.

11. The apparatus according to claim 1, **characterized in that** the apparatus main body (1) has right and left sides, and the second display unit (132) is provided at one of the right and left sides, and
the multi-view display device (120) further includes a fourth display unit (134) provided at a remaining one of the right and left sides of the apparatus main body (1), and a fifth display unit (135) provided at a rear side of the apparatus main body (1), and has a box shape so that display screens of the first display unit (131), the second display unit (132), the third display unit (133), the fourth display unit (134), and the fifth display unit (135) are arranged correspondingly to five sides of the box shape.

12. An information processing apparatus capable of displaying contents data, **characterized by** comprising:
an apparatus main body (1);
a first display unit (131), a second display unit (132), and a third display unit (133) provided on the apparatus main body (1); and
means (21, 211) for displaying the contents data on the first display unit (131), the second display unit (132), and the third display unit (133) in a state where a display angle view of an object has changed.

13. A method of displaying contents data, using a multi-view display device including at least a first display unit (131), a second display unit (132), and a third display unit (133) provided at a front, a side, and a top, respectively, of an information processing apparatus, comprising:
determining (S103) whether or not the contents data includes a first image data, a second image data, and a third image data viewing an object from a front direction, a side direction, and a top direction, respectively; and
displaying (S105, S106, S107, S108, S109) the first image data, the second image data, and the third image data on the first display unit (131), the second display unit (132), and the third display unit (133) of the multi-view display device (120) when it is determined that the contents data includes the first image data, the second image data, and the third image data.

14. The method according to claim 13, further including receiving (S101) the contents data externally from the apparatus.

15. The method according to claim 13, further including reducing each of the first image data, the second image data, and the third image data included in the contents data so as to match with a display resolution of a display unit having a lowest display resolution in the first display unit (131), the second display unit (132), and the third display unit (133).

16. The method according to claim 13, **characterized in that** the information processing apparatus includes a first display controller (31), a second display controller (32), and a third display controller (33) configured to control the first display unit (131), the second display unit (132), and the third display unit (133), respectively, and
the displaying includes distributing the first image data, the second image data, and the third image data included in the contents data to a first display controller (31), a second display controller (32), and a third display controller (33), respectively.

17. The method according to claim 13, **characterized in that** the apparatus further includes a fourth display unit (135) provided at a rear side of the apparatus, and said method'further includes:
displaying, when the contents data further includes document data relevant to the object, the document data on the fourth display unit (135).

18. The method according to claim 13, **characterized in that** a main body (1) of the apparatus has right and left sides, and the second display unit (132) is provided at one of the right and left sides,
the multi-view display device (120) further includes a fourth display unit (134) provided at a remaining one of the right and left sides of the main body, and a fifth display unit (135) provided at a rear side of the main body (1), and said method further includes:
displaying (S311), when the contents data further includes document data relevant to the object, the document data on one of the fourth display unit (134) and the fifth display unit (135) unused for displaying the image data of the object.
